(19) Europäisches Patentamt

European Patent Office

Office européen des brevets

(11) EP 0 592 697 B1

## (12) EUROPEAN PATENT SPECIFICATION

(45) Date of publication and mention
of the grant of the patent:
**08.07.1998 Bulletin 1998/28**

(51) Int Cl.⁶: **G11B 5/60**

(21) Application number: **92117222.7**

(22) Date of filing: **08.10.1992**

(54) **A method of maintaining a constant flying height of a magnetic head and a magnetic disk drive utilized therefor**

Verfahren zur Konstanthaltung des Abstandes eines Magnetkopfes und dessen Gebrauch in einem magnetischem Plattenspeicher

Méthode pour maintenir une hauteur constante de vol d'une tête magnétique et son utilisation dans un dispositif de disque magnétique

(84) Designated Contracting States:
**DE FR GB IT**

(43) Date of publication of application:
**20.04.1994 Bulletin 1994/16**

(73) Proprietor: **TDK Corporation**
**Chuo-ku, Tokyo-to 103 (JP)**

(72) Inventors:
• **Matsuzaki, Mikio, TDK Corporation**
**Chuo-ku, Tokyo 103 (JP)**

• **Fukuda, Kazumasa, TDK Corporation**
**Chuo-ku, Tokyo 103 (JP)**
• **Tsuna, Takamitsu, TDK Corporation**
**Chuo-ku, Tokyo 103 (JP)**

(74) Representative: **Liesegang, Roland, Dr.-Ing.**
**FORRESTER & BOEHMERT**
**Franz-Joseph-Strasse 38**
**80801 München (DE)**

(56) References cited:
**EP-A- 0 361 658**        **US-A- 4 870 519**
**US-A- 4 928 195**

**Description**

BACKGROUND OF THE INVENTION

FIELD OF THE INVENTION

This invention relates to a magnetic disk drive, particularly to a magnetic disk drive wherein, with respect to outer dimensions of a slider of a magnetic head composing the magnetic disk drive along with a magnetic disk and a head supporting device, a thickness of said slider, from a flying plane to an opposite surface on the reverse side thereof is determined to be 0.65 mm or less, a length thereof in the direction of air discharge, 3 mm or less, or preferably 0.5 to 3 mm and a width in a direction orthogonal to the direction of air discharge, 2.5 mm or less, or peferably 0.5 to 2.5 mm, thereby meeting requirements of miniaturization thereof, a high capacity and a high density of a magnetic recording medium, and a smaller diameter of the magnetic disk, and which is provided with high durability and high stability thereof. A magnetic disc drive of this type is disclosed in US-A-4 928 195.

In a conventional magnetic disk drive, a magnetic head is used which flies by a dynamic pressure caused by running a magnetic disk opposing thereto, maintaining a clearance due to a minute air bearing generated between the magnetic disk and the magnetic head. A flying-type magnetic head is provided with a basic structure which is attached with reading/writing elements on a slider having flying planes on the side of a surface thereof opposing a magnetic disk. As conventional examples, a Winchester-type magnetic head provided with a U-shaped core having a coil at a slider composed of a magnetic body, a composite-type magnetic head attached with a bulk-type reading/writing element in a groove of a slider composed of a nonmagnetic ceramic structure and a thin film magnetic head formed with thin film reading/writing elements on a slider thereof by a process similar to the semiconductor production technology, are well known.

Among these flying-type magnetic heads, the Winchester-type magnetic head and the composite-type magnetic head are publicly known, for instance, by Japanese Examined Patent Publication No. 569/1982 (U.S.P. 3,823,416), Japanese Examined Patent Publication No. 21329/1983, Japanese Examined Patent Publication No. 28650/1983 or the like. The reading/writing elements are the bulk-type ones provided with coils composed of wires wound around cores.

The thin film magnetic head is publicly known, for instance, by Japanese Examined Patent Publication No. 84019/1980 (U.S.P. 4,190,872), Japanese Unexamined Patent Publication No. 84020/1980 (U.S.P. 4,219,854) or the like. The thin film magnetic head is provided with a structure wherein a thin film magnetic film, a conductive coil film, an inter-coil-layer insulating film, a protection film and the like are formed on a slider.

With respect to the thin film magnetic head, the inductance value of the conductive coil film is low compared with a bulk-type flying magnetic head, by a single digit or more. Accordingly, the high frequency characteristic thereof is extremely good and the thin film magnetic head is essentially excellent in the high response performance and is suitable for the high density recording. Owing to this characteristic, the thin film magnetic head is expected to achieve a high speed in the data transfer and a high density of magnetic recording even in a domain which can not be reached by the bulk-type flying magnetic head.

Furthermore, the thin film magnetic head is provided with characteristics wherein a magnetic film constructing a magnetic circuit thereof is composed of a metallic magnetic material of permalloy or the like having a high saturation magnetic flux density and a high permeability, a magnetic gap length thereof can be reduced, and a pole width for reading and writing can extremely be narrowed down. Accordingly, in addition to the excellent high frequency characteristic wherein the inductance value of the conductive coil film and the magnetic film composing a core is low, the thin magnetic head can achieve the considerably excellent high response performance and high recording density compared with the bulk-type flying magnetic head.

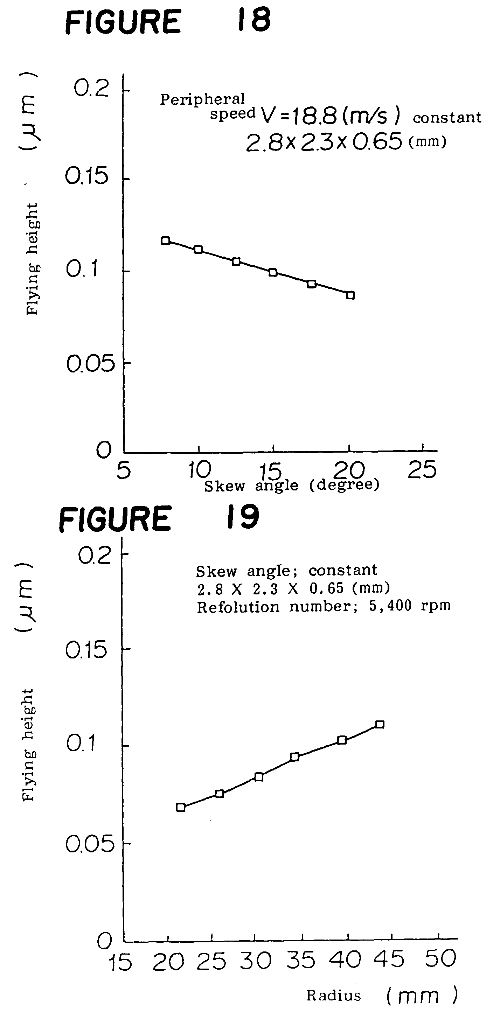

Next, explanation will be given to a specific example of the flying-type magnetic head in reference to Figure 20. Figure 20 is a perspective view of a conventional magnetic head, wherein a reference numeral 1 designates a slider composed of, for instance, a ceramic structure, and 2, a reading/writing element.

The slider 1 is formed with two rails 101 and 102 spaced apart from each other on a plane thereof opposing a magnetic disk and the surfaces of the rails 101 and 102 are formed with flying planes 103 and 104 having a high flatness.

With respect to the outer dimension of the slider 1, as shown for instance in U.S.P. 4,624,048, normally, a thickness d from each of the flying planes 103 and 104 to an opposite surface on the reverse side 105 is selected to be 0.85 mm, a length L in the air discharge direction, 4 mm and a width w in a direction orthogonal to the air discharge direction, 3.2 mm. The flying planes 103 and 104 are provided with structures wherein tapered portions 103a and 104a each is provided on the side of an end thereof which makes an inflow end for an air flow that flows in the direction of an arrow mark a, generated in the combination thereof with a magnetic disk.

The reading/writing element 2 is a thin film element formed by a process similar to the IC production technology in case of a thin film magnetic head, which is attached to an end portion of the air discharge on the opposite side of the tapered portions 103a and 104a. Although not illustrating, the Winchester-type magnetic head, or the composite-type magnetic head is a bulk-type one provided with a coil wound around a core.

When the reading/writing element 2 is composed of a thin film element, with respect to the dimension of the reading/writing element 2, to satisfy a required electromagnetic conversion performance, a diameter D2 thereof in a direction orthogonal to the air discharge direction is determined to be approximately 0.3 mm, and a diameter thereof D1 in a direction from the flying planes 103 and 104 to the opposite surface 105, approximately 0.4 mm. Furthermore, the thin film magnetic head is provided with take-out electrodes 201 and 202 on a side end face of the slider 1 attached with the reading/writing elements. These take-out electrodes 201 and 202 communicate to a conductive coil film of the reading/writing element 2, not shown. The take-out electrodes 201 and 202 are portions to which lead wires communicating to the magnetic disk drive are connected. To provide a lead wire connecting area, a length L0 thereof in a direction orthogonal to the air discharge direction a is determined to be about 0.5 mm, and a wire width h1 viewed in the direction of the opposite surface 105 to the flying planes 103 and 104, approximately 0.2 mm.

The above thin film magnetic head is produced, utilizing a high accuracy pattern forming technology such as photolithography, by forming a great number of thin film reading/writing elements on a wafer to be transformed into a portion of the slider 1, by separating the thin film reading/writing elements obtained by performing a cutting operation on the wafer, and by performing a necessary grooving operation on the rails 101 and 102 or the like and polishing the flying planes 103 and 104.

The magnetic disk drive is attached with the above magnetic head on a front end portion of a head supporting device an end of which is supported by a positioning device, positions the magnetic head on predetermined tracks of the magnetic disk by the positioning device and drives the magnetic head by a so-called contact-start-stop (hereinafter CSS) system wherein the flying planes 103 and 104 of the slider 1 contact the surface of the magnetic disk by a spring and starting and stopping thereof is performed in the contact state. When the magnetic disk is stationary, the flying planes 103 and 104 are pressed to the surface of the magnetic disk by a spring pressure. When the magnetic disk rotates, as shown in Figure 21, a dynamic lift is generated at the flying planes 103 and 104 including the tapered surfaces 103a and 104a of the slider 1, and the magnetic head flies at a flying height g wherein the dynamic pressure is caused by the dynamic lift whereby the disk balances with the spring pressure P of a gimbal. The conventional magnetic head having the above dimensions is provided with a stable flying performance in a domain of the flying height of 0.3 μm or more.

The magnetic disk drive of this kind is utilized in combination with a computer and to meet a requirement of the data processing of the computer system, should correspond to the higher density and the higher capacity of the magnetic recording and the downsizing the magnetic disk diameter.

However, the magnetic head utilized in the conventional magnetic disk drive, is provided with the dimensions wherein the thickness d thereof is selected to be 0.85 mm, the length of L in the air discharge direction, 4 mm and the width w in a direction orthogonal to the air discharge direction, 3.2 mm. Therefore, the following problems are pointed out.

(a) To achieve a high recording density, a spacing loss thereof should be minimized by lowering the flying height. However, the conventional magnetic head is provided with a considerably high value of a rolling angle. Accordingly, the effective flying height can not be lowered under a value determined by the rolling angle.

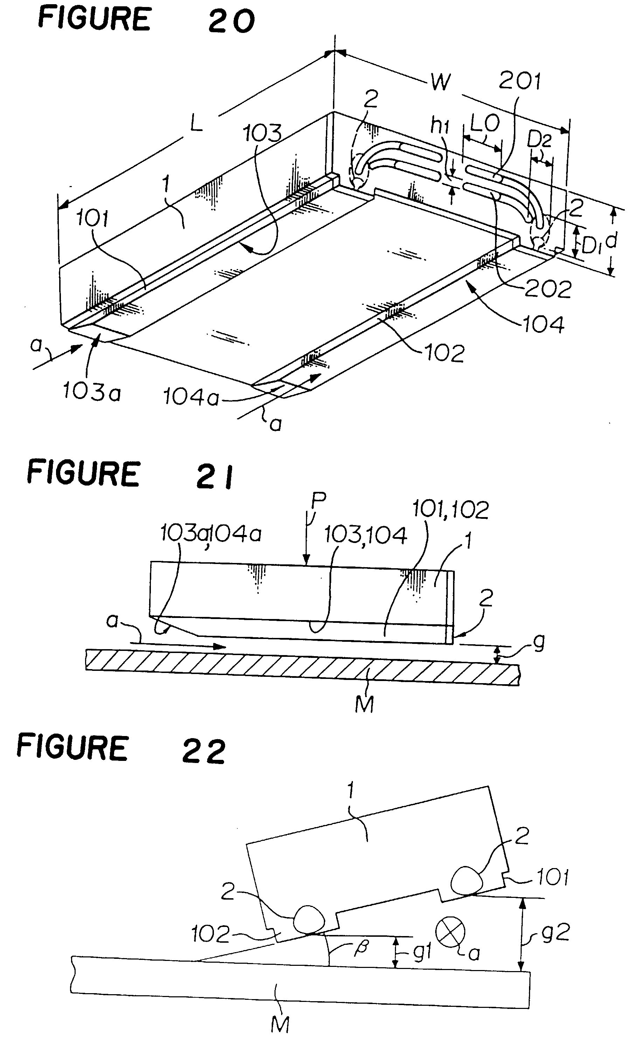

Figure 22 is a diagram for explaining a rolling angle generated between a magnetic disk M and the magnetic head wherein β designates the rolling angle. The larger the rolling angle β, the larger the difference between the flying height g1 viewed from the inner peripheral rotating side and a flying height g2 viewed from the outer peripheral rotating side. Normally, in the magnetic disk drive, a magnetic conversion element 2 on the outer peripheral rotating side of the magnetic head is utilized. Therefore, even when the flying height g1 on the inner peripheral rotating side thereof is reduced, so far as the rolling angle β remains large, the flying height g2 on the outer peripheral rotating side thereof which directly influences on the electromagnetic conversion performance, can not be reduced. Accordingly, in the conventional magnetic head which is limited with respect to the lowering of the rolling angle β, the high density recording which can be achieved by lowering the effective flying height and by reduction of the spacing loss, is provided with a limitation. Furthermore, the rolling angle β has a tendency wherein the larger a relative speed between the magnetic disk and the magnetic head, the larger the rolling angle. Accordingly, the more the magnetic head is placed towards the outer periphery of the magnetic disk, the more enhanced the effective flying height, and the more the spacing loss. Therefore, the higher density recording can not be achieved.

(b) Since the rolling angle β is enhanced, the flying posture of the magnetic head becomes unstable and a head crash is liable to be caused. Accordingly, the reliability thereof is lowered.

(c) As a means of solving the above problems caused by the increase of the rolling angle, a method may be considered wherein a center of motion of the slider, that is, a pivot position of a gimbal, is set to a position deviated from the middle of the slider. However, in this case, a deviation of mass is caused with respect to the center of motion of the slider, the moment of momentum becomes nonuniform, and a follow-up performance to vibration thereof is deteriorated. As stated above, in the magnetic head having the conventional dimensions, it is difficult to lower the flying height while stabilizing the flying posture and maintaining the reliability.

(d) When the magnetic head is placed stationary on the magnetic disk, the landing area occupied by the magnetic head can not be diminished under an area determined by the length in the air discharge direction of L=4 mm and the width of w=3.2 mm in a direction orthogonal to the air discharge direction. Accordingly, the magnetic recording area which is substantially usable on the magnetic disk is limited by the landing area of the magnetic head, which causes limitations in increasing the track number and increasing the recording density and the recording capacity. This shortcoming is especially and significantly displayed in a small magnetic disk. The factor which directly influences on the reduction of the track number is the width w, and the conventional magnetic head having the width w as large as 3.2 mm is a great hazard against the increase of the track number.

(e) To meet a requirement of downsizing a computer as shown in a laptop personal computer or the like, the magnetic disk drive per se should be downsided. However, since in the conventional slider, the thickness d thereof is as large as 0.85 mm, there is a limitation in thinning the magnetic disk drive. Furthermore, since a number of magnetic disks which can be accommodated in a limited space of the magnetic disk drive, is limited by the thickness of the magnetic head, there is a limitation in enhancing the capacity of the magnetic disk drive provided through the increase of the number of disks.

(f) To meet a requirement of portable handling of a computer, the magnetic disk drive should be excellent in the portability. To provide the portability, it is most desirable to drive the magnetic disk drive by a cell. However, in the conventional magnetic head provided with the above-mentioned dimensions, since the static friction in the CSS starting is large, there is a technical difficulty in obtaining a driving torque of a disk driving motor which drives to rotate the magnetic disk stably by a cell, overcoming the static friction.

(g) In the thin film magnetic head, since the area of the end face thereof in the air discharge direction attached with thin film reading/writing elements 2 is a large area determined by the thickness of d=0.85 mm and the width of w=3.2 mm, the spacing or a pitch interval between the thin film reading/writing elements 2 is increased, and the number of elements which can be formed in a wafer is decreased. Accordingly, the cost of the thin film magnetic head is elevated.

## SUMMARY OF THE INVENTION

It is an object of the present invention to solve the above conventional problems and to provide a method of maintaining constant flying height of a magnetic head and a magnetic disk drive utilized therefor, which is suitable for the higher density and the higher capacity of the magnetic recording and the downsizing the magnetic disk diameter and excellent in the durability and the stability.

According to the present invention, there is provided a method and a magnetic disk drive comprising the features of claim 1 and 2, respectively.

The magnetic disc drive has:

a magnetic disk; a positioning device; a head supporting device; and a magnetic head;

said positioning device supporting one end of said head supporting device;

the head supporting device supporting said magnetic head at the other end thereof;

the magnetic head being attached with reading/writing elements at an air discharge end of a slider having flying planes on a side of a third plane thereof opposing the magnetic disk;

a thickness of said slider from each of the floating planes to an opposite surface on the reverse side thereof being 0.65 mm or less;

a length in a first direction of air discharge thereof being 3 mm or less, or preferably 0.5 to 3 mm; and a width in a second direction orthogonal to the first direction of air discharge being 2.5 mm or less, or preferably 0.5 to 2.5 mm; wherein

the positioning device rotates the head supporting device on a plane above said magnetic disk within a predetermined angle range; and

wherein a change of the flying height of the magnetic head on the magnetic disk is 0.2 µm or less, when the skew angle is changed in a range of -20 to 20 degree.

According to a second aspect of the present invention, there is provided the magnetic disk drive according to the second aspect, wherein the reading/writing elements each is a thin film element.

According to a third aspect of the present invention, there is provided the magnetic disk drive according to the second aspect or the third aspect, wherein each of the flying planes is a plane having no tapered portion at an air inflow end thereof.

It has been found that the slider having the dimensions wherein the thickness from each of the flying planes to the opposite surface is determined to be 0.65 mm or less, the length in the air discharge direction, 3 mm or less, or preferably 0.5 to 3 mm, and the width in a direction orthogonal to the air discharge direction, 2.5 mm or less, or preferably 0.5 to 2.5 mm, is provided with a high flying stability while maintaining a low flying height. It is predicted that this is because, compared with the conventional magnetic head, the rolling angle (or rolling value) is considerably reduced exceeding a predictable range. Moreover, as shown later in actual measurement data, the lowering the rolling angle is especially remarkable in the outer peripheral side of the magnetic disk wherein the skew angle is large. Accordingly, at the outer peripheral side of the magnetic disk having a large skew angle, which essentially necessitates the lowering the rolling angle, the increase of the effective flying height and the increase of the spacing loss are restrained, thereby giving the higher density recording.

In this application, since the selection of the configuration of the slider is performed as a means of reducing the rolling angle, the alteration in the center of motion of the slider or the like in not necessary. Accordingly, there are no problems of the deviation of mass with respect to the center of motion of the slider, the nonuniformity of the moment of momentum or the like, and therefore, the flying height can be reduced while stabilizing the flying posture and providing the reliability.

Furthermore, as shown in actual measurement data infra, it is found that a constant flying height can be maintained without being influenced substantially by the size of the skew angle. As means of maintaining the flying quantity constant without being influenced by the size of skew angle, there are inventions disclosed, for instance, in Japanese Unexamined Patent Publication No. 278087/1986, U.S.P. 4,673,996, and U.S.P. 4,870,519. The sliders disclosed in these prior arts, are provided with shallow grooves on the side faces of rails, which are called a transverse pressure contour slider (TPC). In this application, the flying height is maintained constant without being influenced by the size of the skew angle by the selection of the dimensions of the slider and not by the grooving operation of the slider. Therefore, the invention is provided with an advantage wherein the working of a slider is not necessary.

Furthermore, since the constant flying height can be maintained without being influenced substantially by the size of skew angle, it is possible to adopt a zone bit recording system. Therefore, a magnetic disk drive having a high density recording and a high capacity can be obtained. Furthermore, since the constant flying height can be maintained without being influenced substantially by the size of the skew angle, the skew angle can be set at a large value, thereby miniaturizing the magnetic disk drive.

Furthermore, since the width in a direction orthogonal to the air discharge direction is 2.5 mm or less, compared with a slider in the conventional magnetic head, the landing area occupied by the magnetic head on the magnetic disk when the magnetic head is placed stationary on the magnetic disk, is considerably reduced. Accordingly, the number of tracks on the magnetic disk is increased, which contributes to the increase of the recording density and the memory capacity thereof. This operation is significantly effective particularly in a magnetic disk having a small diameter.

Since the thickness d of the slider is 0.65 mm or less, the magnetic disk device can be thinned by 70% or less of the conventional device. Furthermore, the number of magnetic disks which can be accommodated in the magnetic disk, is increased, thereby achieving a higher capacity thereof.

When the thickness d from each of the flying planes to the opposite surface on the reverse sides exceeds 0.65 mm, the position of the center of gravity thereof is shifted on the side of the opposite surface which is a plane connecting to a gimbal, thereby deteriorating the flying stability. When the thickness is too thin, the rigidity of the slider is lowered, torsion or deformation thereof is caused in the slider and the flatness of the air bearing plane can not be provided. Accordingly, the thickness d is set to a lower limit value which can provide the flatness of the necessary air bearing plane, in a range of 0.65 mm or less. Furthermore, when the length L and the width w are too small, a flying plane area sufficient for securing the stable flying performance may not be provided, thereby deteriorating the flying stability. Accordingly, the lower limit values of the length L and the width w are preferably 0.5 mm or more.

Furthermore, by the miniaturization of the total configuration of the slider, the dynamic lift is reduced and accordingly, the spring pressure can be lowered. Therefore, the loading force exerted between the flying plane and the magnetic disk in contacting the magnetic head to the magnetic disk is lowered and therefore, friction and wear are diminished thereby promoting the durability thereof.

Furthermore, since the static friction in the CSS starting, is reduced, the driving torque of the disk driving motor is decreased thereby reducing the power consumption. Since the disk driving motor consumes most of the power for the total of the magnetic disk drive, the power consumption of the total of the magnetic disk drive is reduced, thereby realizing a magnetic disk drive capable of driving the device by a cell.

Compared with the slider in the conventional magnetic head, the total configuration is miniaturized and particularly in the thin film magnetic head, the area of the end face of the slider to be attached with the reading/writing elements is decreased. Accordingly, when the reading/writing elements are formed by thin film elements, the number of the reading/writing elements which can be formed in a wafer is increased thereby contributing significantly to the cost reduction.

Furthermore, by the weight reduction thereof in accordance with the selection of dimensions thereof, the following operations can be provided.

First, compared with the slider in the conventional magnetic head, the mass of the slider can significantly be reduced. Therefore, the resonance frequency of a head-gimbal system is increased, and the crashing is hardly caused even by a low flying height of 0.2 $\mu$m or less thereby promoting the CSS reliability.

Further, by the reduction of the mass thereof, the load applied to an actuator for accessing is reduced and a high speed accessing can be performed. Especially, in case of the thin film magnetic head, to the inherent performance wherein the inductance value of the conductive coil film is low, the high frequency performance is extremely excellent and the high speed response performance is excellent, the high speed accessing is synergetically multiplied, thereby dramatically elevating the reading/writing speed and the data transfer speed.

BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

Figure 1 is a perspective view of a magnetic head constituting a magnetic disk drive according to the present invention;

Figure 2 is a front view of a slider of the magnetic head constituting the magnetic disk drive according to the present invention;

Figure 3 is a bottom view of the slider of the magnetic head constituting the invented magnetic disk drive, viewed from the side of a flying plane thereof;

Figure 4 is a side view of the slider of the magnetic head constituting the invented magnetic disk drive;

Figures 5A and 5B are perspective views of other embodiments of magnetic heads constituting magnetic disk drives according to the present invention;

Figure 6 is a diagram showing a magnetic disk drive according to the present invention;

Figure 7 is a front view of an important part of a head supporting device constituting the magnetic disk drive according to the present invention;

Figure 8 is a bottom view of a head supporting device constituting the magnetic disk drive of this invention, viewed from the side of a flying plane thereof;

Figure 9 is a diagram showing a measurement data of the flying stability of the magnetic disk drive according to the present invention;

Figure 10 is a diagram showing a measurement system for obtaining the measurement data of Figure 9;

Figures 11 through 14 designate data showing a relationship among the peripheral speed of the magnetic disk (m/s), the skew angle (degree) of the magnetic head and the rolling value (μm);

Figure 15 designates data showing a relationship among the skew angle (degree) of the magnetic head in the invented magnetic disk drive, the corresponding radius of rotation of a magnetic disk (mm) and the flying height (μm);

Figure 15A designates data showing a relationship among the skew angle (degree) of the magnetic head in the invented magnetic disk drive, the corresponding radius of rotation of a magnetic disk (mm) and the flying height (μm);

Figure 16 is a diagram for explaining the skew angle shown in the data of Figure 15;

Figure 17 is a diagram showing data of the characteristic of the skew angle versus the flying height when the peripheral speed V of the magnetic disk is maintained to a constant value;

Figure 18 is a diagram showing data of the characteristic of the skew angle versus the flying height;

Figure 19 is a diagram showing data of the characteristic of the peripheral speed of magnetic disk versus the flying height;

Figure 20 is a perspective view of a conventional magnetic head;

Figure 21 is a diagram showing a state of operation of a flying-type magnetic head; and

Figure 22 is a diagram showing a state of operation of a flying-type magnetic head.

DETAILED DESCRIPTION OF THE PREFERRED EMBODIMENTS

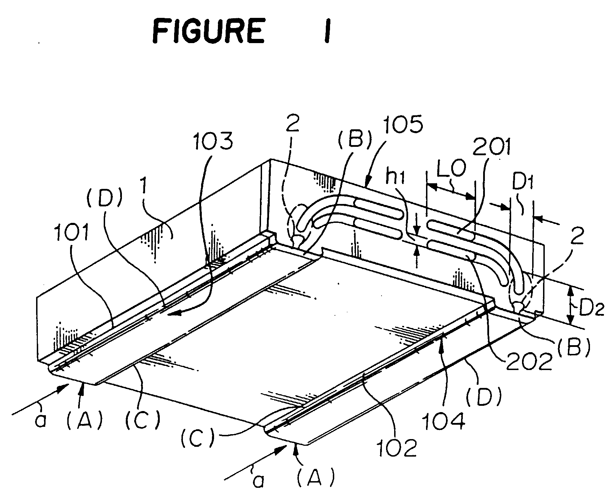

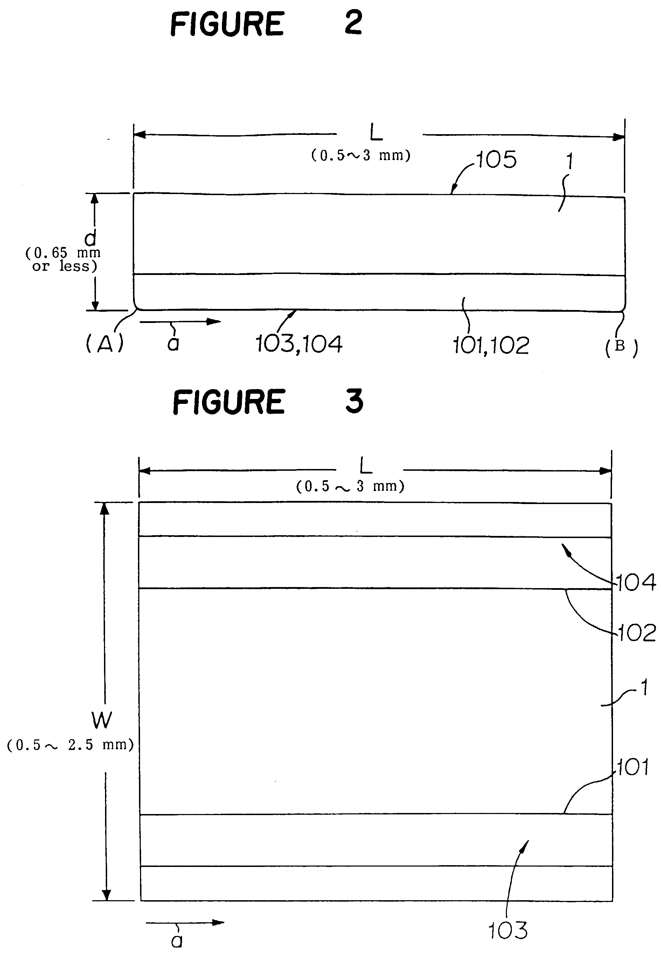

Figure 1 is a perspective view of a magnetic head which is a principal component of a magnetic disk drive according to the present invention, Figure 2, a front view of a slider, Figure 3, a bottom view of the slider viewed from the side of flying planes thereof, and Figure 4, a side view of a slider. In these Figures, the notation the same with those in Figure 20 designates the same or the corresponding element. In the slider 1, the thickness d from each of the flying planes 103 and 104 to the opposite surface on the reverse side 105 is determined to be 0.65 mm or less, the length L in the direction of the air discharge (running direction) a, 0.5 to 3 mm, and the width in a direction orthogonal to the air discharge direction a, 0.5 to 2.5 mm. Since the thickness of the attached portion of the reading/writing element 2 is substantially negligible compared with the length L, the length L is a dimension substantially including the thickness of the reading/writing element 2. The reading/writing element 2 in this embodiment is a thin film element.

As an example, the diameter D1 of the reading/writing element 2 in a direction orthogonal to the air discharge direction, is determined to be 0.3 mm and the length L0 of each of take-out electrodes 201 and 202 in a direction orthogonal to the air discharge direction, 0.5 mm as representative values of the dimension thereof. When two reading/writing elements 2 are provided, the total width composed by these elements is 2(D1+L0) which is 1.6 mm. When the width w in a direction orthogonal the air discharge direction a is determined to be 2.5 mm as disclosed in this application, an allowance of 0.9 mm can be provided.

As shown in the embodiment of Figures 1 through 4, the flying planes 103 and 104 of the slider 1 can be provided with a planar shape having no tapered portions. Edges (A) and (B) of the flying planes 103 and 104 viewed in the air discharge direction a, is preferable to be formed in an arcuate shape to prevent scratching between the slider and the surface of the magnetic disk in the CSS operation. Other edges (C) and (D) of the flying planes can be also formed in an arcuate shape. Furthermore, it is possible to provide a structure to the slider wherein a rail is provided in a substantially middle portion in the width direction, the surface of which serves as a flying plane. This structure is convenient for achieving the miniaturization of the total device.

Furthermore, when the length and the width of the slider are respectively determined to be 0.5 mm or more and 1.5 mm or less, the total surface of the slider opposing the disk may be a flying plane.

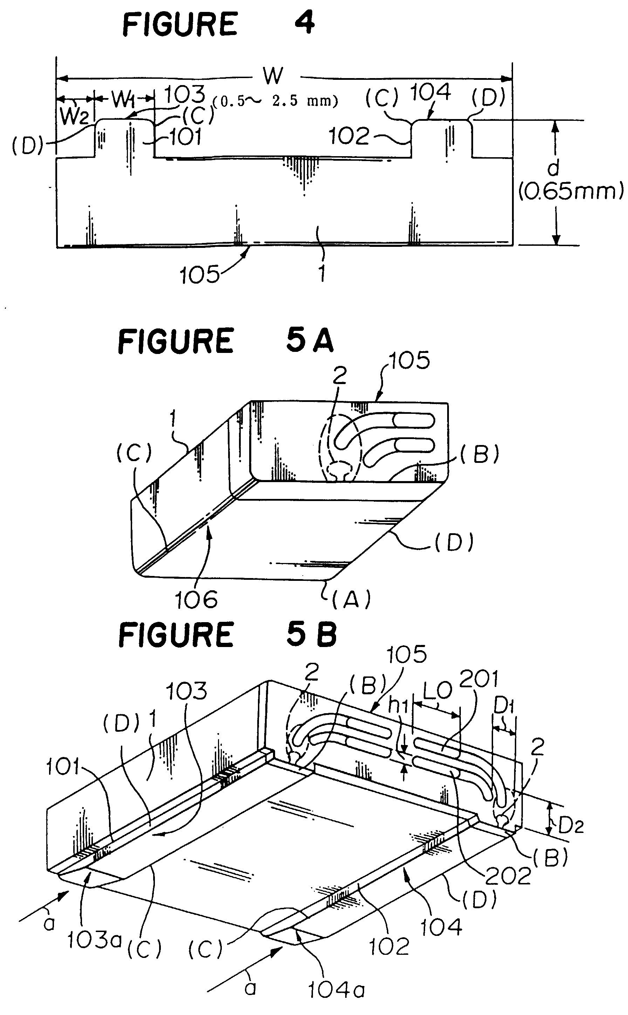

Figures 5A an 5B designate perspective views of other embodiments of magnetic heads according to the present invention. In the embodiment of Figure 5A, the flying plane 106 of the slider 1 is a plane having no rails, and edges thereof (A) through (D) are formed in an arcuate shape. In the embodiment of Figure 5B, as in the conventional example of Figure 20 the tapered planes 103a and 104a are provided in the flying planes 103 and 104.

In the above magnetic heads, the recording area thereof is increased and a stable flying characteristic can be provided at a low flying height of 0.2 $\mu$m or less in the combination thereof with a head supporting device and a high durability thereof can be achieved. Next, explanation will be given to specific examples. In the structure shown in the embodiment of Figures 1 through 4, with respect to the outer dimensions of the slider 1, the thickness is determined as d=0.65 mm, the length, L=2.8 mm, the width, w=2.3 mm and the width of each of the flying planes 103 and 104, $w_1$=0.3 mm.

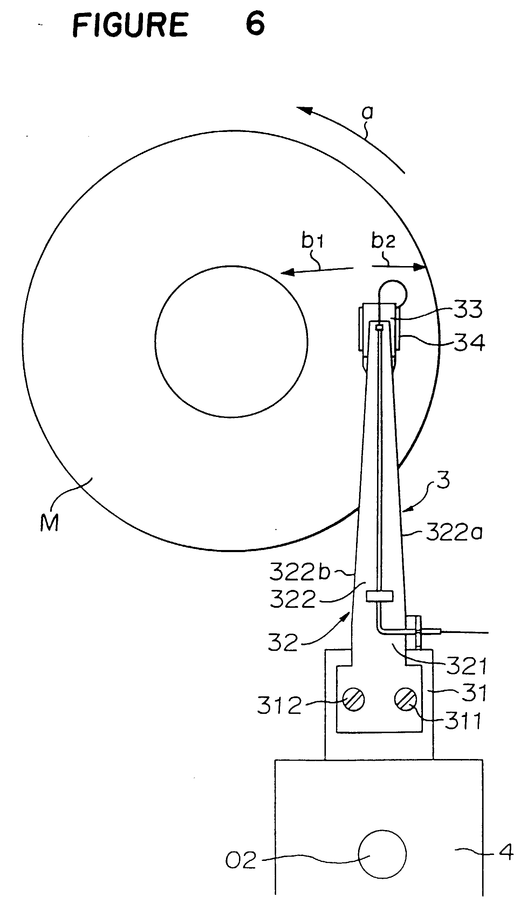

Figure 6 designates a magnetic disk drive of this invention wherein the magnetic head is attached to the head supporting device. A notation M designates the magnetic disk, 3, the head supporting device, and 4, a positioning mechanism. The magnetic disk M is driven to rotate in the direction of an arrow mark a by a rotating driving mechanism, not shown. The head supporting device 3 is positioned by the positioning mechanism 4 by driving to rotate it in a predetermined angle (skew angle) range in directions of an arrow mark b1 or b2 around a center of rotation at a supporting point O2. In this way, the magnetic recording and playback are performed between the magnetic disk M and the magnetic head at predetermined tracks, which constitute a swing-arm-type magnetic disk drive.

In the structure of the head supporting device 3, an end of a supporter 32 composed of a resilient thin metal plate is attached and fixed to a rigid arm 31 which is fixed to the positioning mechanism 4 by fasteners 311 and 312, a flexible body 33 composed similarly by a metallic thin plate is attached to a free end or an end of the supporter 32 in the longitudinal direction thereof and a magnetic head 34 is attached to the bottom surface of the flexible body 33. A portion of the supporter 32 which is attached to the rigid arm 31 constitutes an elastic spring 321 and contiguous to the elastic spring 321, a rigid beam 322 is formed. The rigid beam 322 is provided with flanges 322a and 322b which are formed by bending both end portions of the rigid beam 322, thereby providing a loading force for pressing the magnetic head 34 to the magnetic disk M. In this example, the lengths, the thicknesses and the spring constants or the like of the rigid arm 31, the supporter 32 and the flexible body 33 are determined so that a value of the load exerted from the magnetic head 34 to the magnetic disk M is 9.5 g or less.

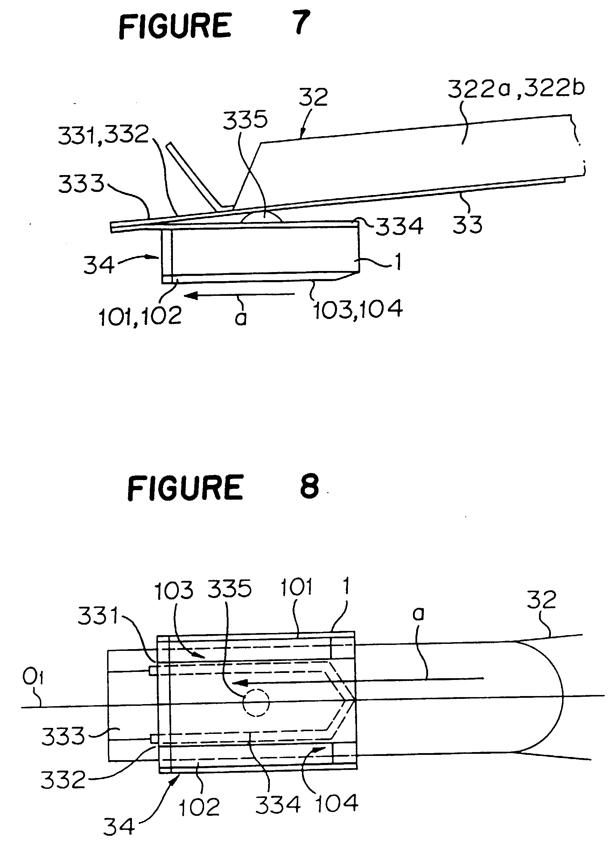

Figure 7 is a front view of an important part of the head supporting device, and Figure 8, a bottom view thereof viewed from the side of the flying plane. The flexible body 33 is composed of two outer flexible frames 331 and 332 extended in approximately parallel with an axial line of the supporter 32 in the longitudinal direction thereof, a transverse frame 333 which connects the outer flexible frames 331 and 332 at an end of the flexible body 33 on the opposite side of the supporter 32, and a central tongue 334 extended in approximately parallel with the outer flexible frames 331 and 332 from approximately a middle portion of the transverse frame 333 having a free end. An end of the flexible body 33 on the side of the transverse frame 333, is attached to the vicinity of the free end of the supporter 32 by welding or the like.

The upper face of the central tongue 334 of the flexible body 33 is provided with a protrusion for loading 335 having for instance, a semispherical shape or the like, and the load is transmitted from the free end of the supporter 32 to the central tongue 334 via the protrusion for loading 335. The magnetic head 34 of this invention is attached to the lower face of the central tongue 34 by bonding or the like.

In the construction of Figure 6, when the magnetic head flies at a portion of the magnetic disk M wherein the peripheral speed thereof is 9 m/s, a flying height of 0.09 $\mu$m is achieved.

When the dimensions of the slider 1 are set to the above values, and when general thin film reading/writing elements are formed each having a track width of 8 $\mu$m and a track pitch of 12.7 $\mu$m, the recording area on the magnetic disk M can be increased by about 80 tracks compared with a thin film magnetic head in use of a slider of conventional dimensions.

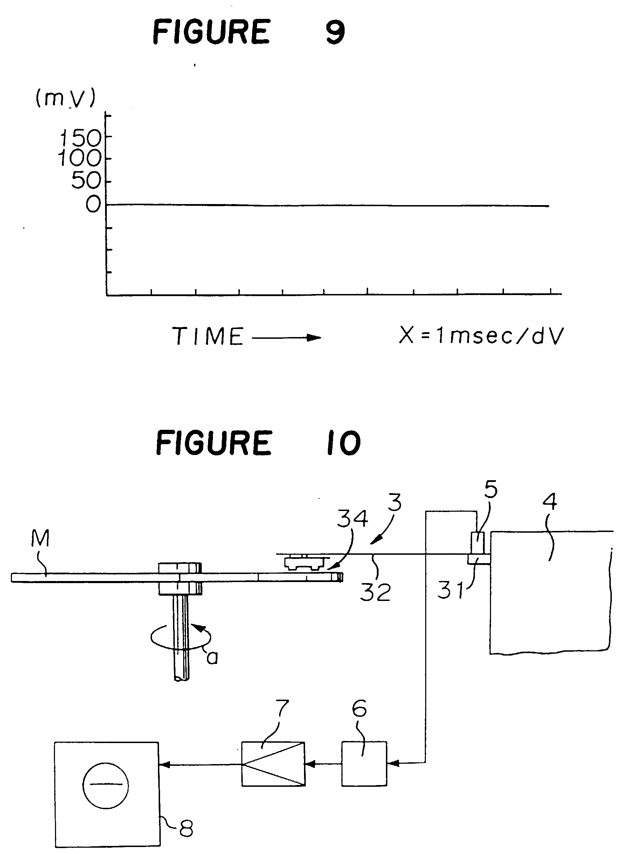

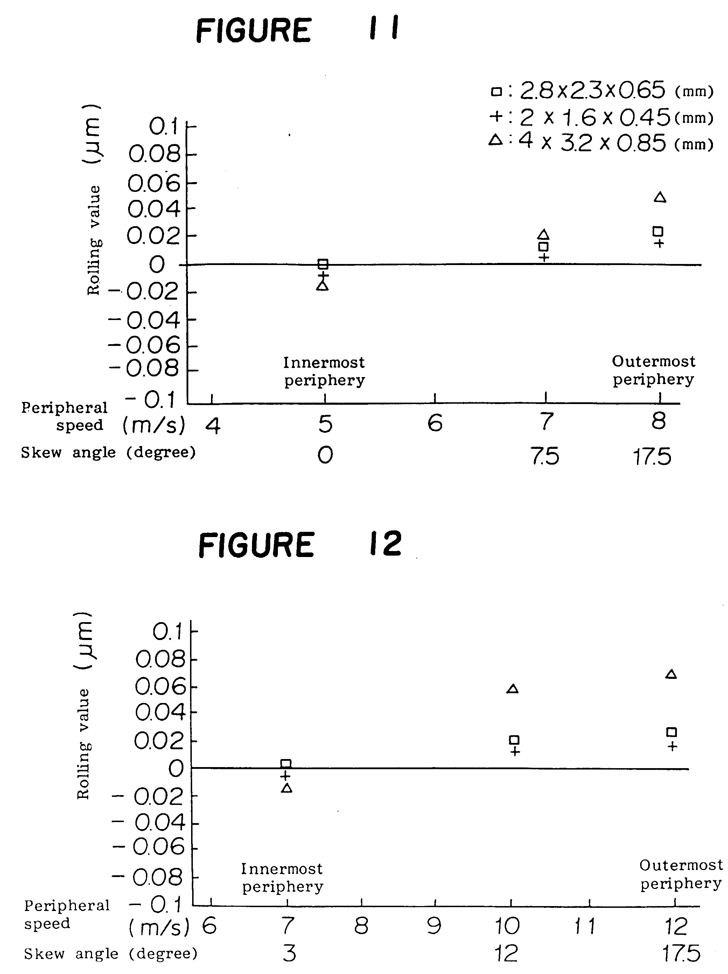

Figure 9 is a diagram showing measurement data for the flying characteristic of the magnetic disk drive shown in Figures 6 through 8. The measurement data of Figure 9 is obtained by a measurement system shown in Figure 10. In Figure 10, a reference numeral 5 designates an acoustic emission sensor (hereinafter AE sensor), 6, a filter, 7, an amplifier and 8, an oscilloscope. Measurement conditions in Figure 10 are as follows.

Flying height of the magnetic head 34; 0.09 $\mu$m.

Load Force; 9.5 g.
Peripheral speed of the magnetic disk M; 9 m/s.
Measurement frequency; 150 to 400 kHz.
Amplification degree; 60 dB.
Surface smoothness of the magnetic disk M; $R_{max}$ 100Å.
Oscilloscope 8; X-axis 1 msec/div,
      Y-axis 50 mv/div.

As shown in the measurement data of Figure 9, in the magnetic disk device in use of the flying-type magnetic head 34 of this invention, almost no output of the AE sensor is generated. Based on this experiment, it is found that the flying-type magnetic head of this invention is provided with a stable flying characteristic maintaining a stable flying posture even when the flying height is provided with a low value of 0.09 μm.

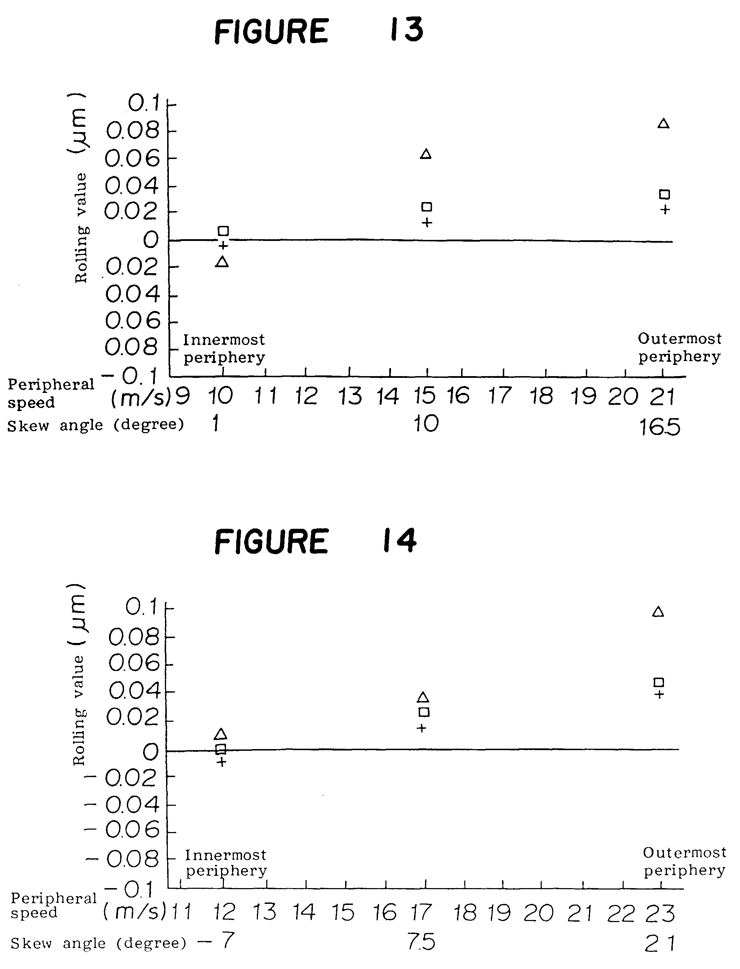

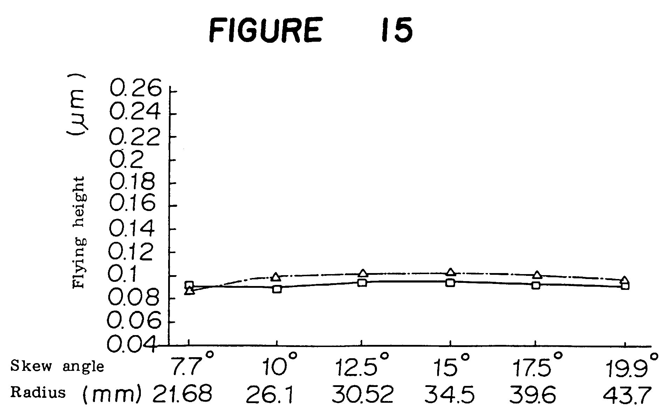

The fact that the magnetic head of this invention maintains the stable flying posture at a low flying height, is substantiated by actual measurement data of Figures 11 through 14. The data in Figures 11 to 14 are obtained by the swing-arm-type magnetic disk device shown in Figure 6. In Figures 11 through 14, the abscissas designate the peripheral speed of the magnetic disk (m/s) and the skew angle (degree) of the magnetic head, and the ordinates, the rolling value (μm). The rolling value is an absolute value of the difference between the flying height on the side of outer periphery and the flying height on the side of inner periphery of the air bearing plane. For instance, referring to Figure 22, it is the difference lg2-g1l between the flying height g2 of the rail 101 and the flying height gl of the rail 102. Accordingly, the rolling value is equivalent to the rolling angle. Figure 11 designates the characteristic of a magnetic disk having a diameter of 4.57 cm (1.8 inch), Figure 12, the characteristic of a magnetic disk having a diameter of 6.35 cm (2.5 inch), Figure 13, the characteristic of a magnetic disk having a diameter of 8.89 cm (3.5 inch), and Figure 14, the characteristic of a magnetic disk having a diameter of 13.33 cm (5.25 inch), respectively. In Figures 11 through 14, □ marks displayed on data plotting points designate data when a magnetic head having dimensions shown below (hereinafter, magnetic head A) is utilized;

$$L \times W \times d = 2.8 \text{ mm} \times 2.3 \text{ mm} \times 0.65 \text{ mm},$$

+ marks designate data when a magnetic head having dimensions shown below (hereinafter, magnetic head B) is utilized;

$$L \times W \times d = 2 \text{ mm} \times 1.6 \text{ mm} \times 0.45 \text{ mm},$$

△ marks designate data when a magnetic head having dimensions shown below (hereinafter, magnetic head C) is utilized;

$$L \times W \times d = 4 \text{ mm} \times 3.2 \text{ mm} \times 0.85 \text{ mm}.$$

Accordingly, the △ marks designate data of a conventional magnetic head and □ marks and + marks, data of invented magnetic heads.

As shown in Figures 11 through 14, in these invented magnetic heads, compared with the conventional magnetic head, the rolling value, that is, the rolling angle is reduced. Especially, at around the outer periphery wherein the peripheral speed is increased, the rolling angles of the invented magnetic heads are considerably reduced compared with the rolling angle of the conventional magnetic head. In the invented magnetic heads, compared with the conventional magnetic head, the differences of the rolling values between the innermost periphery and the outermost periphery of magnetic disk are considerably reduced. Accordingly, in this invention, the magnetic head is provided with a stable flying posture over the whole area of the magnetic disk. Furthermore, since the rolling angles are reduced, the magnetic head is provided wherein the effective flying height is lowered, the spacing loss is reduced and which is suitable for the high recording density.

The data of Figures 11 through 14 includes a remarkable technological matter. When the rolling value or the rolling value is proportional to the dimension of the magnetic head, the value of the □ mark which is the data of the magnetic head A should be around 70% of the data of the △ mark which is the data of the magnetic head C. Furthermore, the value of the + mark which is the data of the magnetic head B, should be at a position around that of 50% of the value of the data of the △ mark which is the data of the magnetic head C. However, the data in Figures 11 through 14 are not in such a way. The □ mark and + mark which are the data of the magnetic heads A and B are provided with values which are near to each other, and there clearly is a difference of significance between the □ mark or the + mark and the △ mark which is the data of the magnetic head C. In observing these data, it can be predicted that there is a critical point which lowers the rolling angle, to around 75% of a ratio of dimension of the invented magnetic head as compared to the conventional one.

Furthermore, in observing Figures 11 through 14, the above difference of significance is remarkably shown at the outer periphery side wherein a relative speed between the magnetic disk and the magnetic head is increased. Accordingly, the increase of the effective flying height and the increase of spacing loss are restrained on the outer periphery side of the magnetic disk wherein the lowering of the rolling angle is essentially required, thereby achieving the high density recording.

As stated above, according to the present invention, the magnetic disk drive is provided with a special effect wherein the rolling angle is lowered in a range not predictable by the ratio of dimension between the invented magnetic head and the conventional magnetic head, and the spacing loss thereof is reduced and which is suitable for the high recording density.

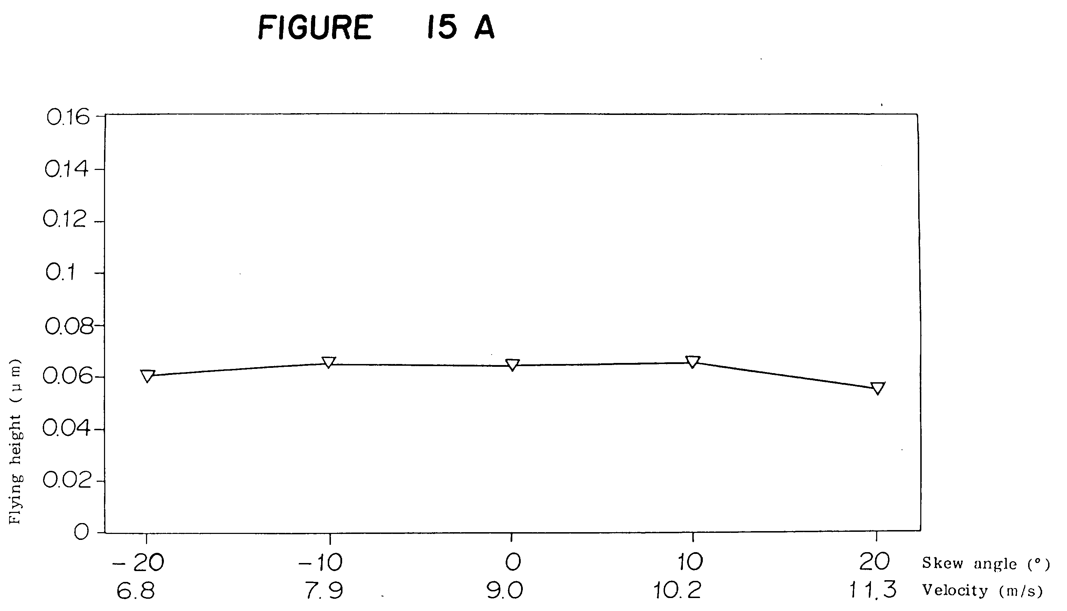

Figure 15 designates data showing a relationship among the skew angle (degree) of the magnetic head in the invented magnetic device, and a corresponding radius of rotation (mm) of the magnetic disk and the flying height (μm); and Figure 15A, the similar data for the magnetic head shown in Figure 5A, the size of which L × W × d is 1 mm × 1 mm × 0.3 mm, and Figure 16 is a diagram for explaining the definition of the skew angle shown in the data of Figures 15 and 15A. In Figures 15 and 15A, the abscissas designate the skew angle and the corresponding radius of rotation (mm), and the ordinates, the flying height (μm). As for the magnetic head for Figure 15, a slider having the ratio of dimension of 70% (2.8 × 2.3 × 0.65) is utilized and the load is set to 6.5 g.

As clearly shown in Figure 15, the variation of the flying height is about 0.01 (μm) or less in a range of the skew angle of 7.7° to 19.9° and a constant flying height can be maintained without being substantially influenced by the size of the skew angle. This reduction of the variation is clearly shown also in Figure 15A in the skew angle range of -20° to 20°. In this invention, the flying height can be maintained constant by the selection of the dimension of the slider. Accordingly, since the flying height can be maintained constant, it is not necessary to work the slider, which is different from the TPC-type sliders disclosed in Japanese Unexamined Patent Publication No. 278087/1986, U.S.P. 4,673,996 and U.S.P. 4,870,519.

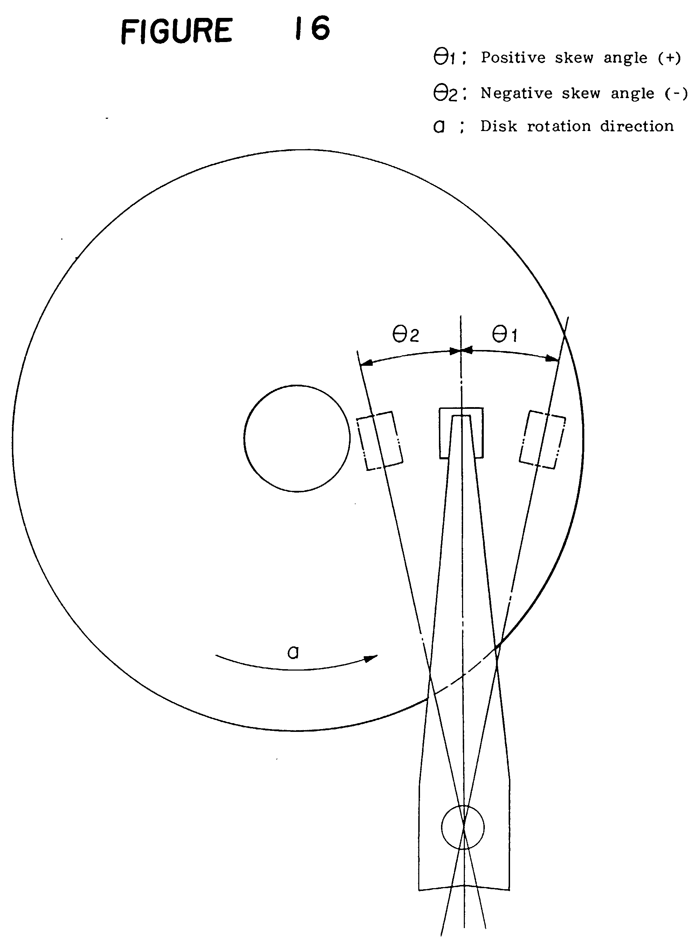

The basis of the fact that the invented magnetic disk drive is not provided with the skew angle dependency can be explained as follows referring to test results. Figure 17 is a diagram showing data for the characteristic of the skew angle versus the flying height when the pripheral speed V of the magnetic disks is maintained to a constant value of V=18.8 (m/s). As mentioned above, the □ mark shown at a data protting point designates the data when the invented magnetic head A is utilized, the + mark, the data when the invented magnetic head B is utilized, and the Δ mark, the data when the conventional magnetic head C is utilized, respectively. Accordingly, the Δ mark represents the data of the conventional magnetic disk device, whereas the □ mark and the + mark, the data of the invented magnetic devices.

As shown in Figure 17, in the data of the invented magnetic disk devices (the data of the □ mark and the + mark), compared with the data of the conventional magnetic disk device (the data of the Δ mark), the variation width of the flying height corresponding to the change of the skew angle is considerably reduced. For example, in a range of the skew angle of -5 to +20 degree, the variation width of the flying height Δga when the invented magnetic head A is utilized and the variation width of the flying height Δgb when the invented

magnetic head B is utilized, are considerably smaller than the variation width of the flying height Δgc when the conventional magnetic head C is utilized. Figure 17 designates the data which is obtained by maintaining the peripheral speed of the magnetic disk to a constant value of 18.8 (m/s). Therefore, the flying height mainly depends on the skew angle. Therefore, in the magnetic disk device utilizing the invented magnetic head, the skew angle dependency is considerably reduced compared with the conventional one.

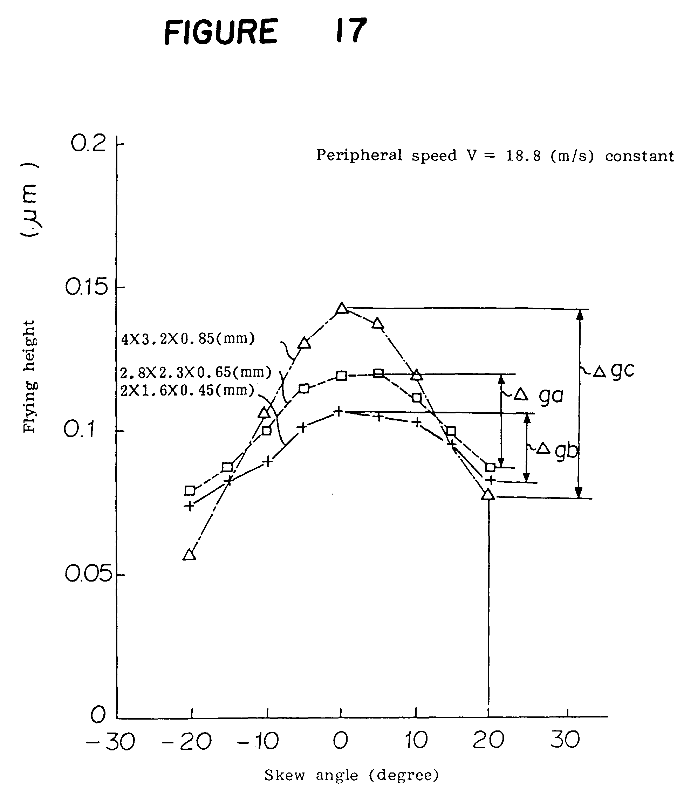

Next, Figure 18 shows the data of the characteristic of the skew angle versus the flying height when the skew angle is set in a range of 5 to 20 degree. The peripheral speed of the magnetic disk V is set to a constant value of V=18.8 (m/s). As the magnetic head, the magnetic head A (2.8 mm × 2.3 mm × 0.65 mm) is utilized. As shown in Figure 18, the larger the skew angle, the lower the flying height.

Next, Figure 19 designates the data of the characteristic of the peripheral speed of the magnetic disk versus flying height. To cancel the skew angle dependency, the skew angle is set to 0 degree. As shown in Figure 18, the larger the peripheral speed, the more increased is the flying height.

In the actual magnetic disk device, the skew angle and the peripheral speed change simultaneously. Therefore, a characteristic synthesized by those of Figures 18 and 19 is obtained. As shown in Figures 17 and 18, the invented magnetic head A is provided with a small skew angle dependency of the flying height. In the invented magnetic head A, when the skew angle dependency is coupled with the peripheral speed dependency of Figure 19, the peripheral speed dependency of the flying height is almost canceled out. This is the same also in the case of the magnetic head B. Accordingly, as shown in Figure 15, the constant flying height can be maintained without being substantially influenced by the size of the skew angle.

The advantage wherein the constant flying height can be maintained without being substantially influenced by the size of skew angle, is as follows.

First, since the constant flying height can be maintained without being substantially influenced by the size of the skew angle, it is possible to adopt the zone bit recording system and the high density recording. The zone bit recording system is a technology developed for the high recording density, and the literatures describing the technology are U.S.P. 4,894,734, U.S.P. 4,999,720 and U.S.P. 5,087,992.

Next, since the skew angle can be set to a large value, it is possible to shorten the length of the head supporting device supporting the magnetic head. Therefore, a downsized magnetic disk drive can be realized. In the conventional magnetic head, the movable range of skew angle is 11 to 19 degrees. In the invented magnetic head, the movable range of the skew angle can be set in a range of -20 to 20 degree. Combined with the zone bit recording system, a downsized magnetic disk drive having a high density recording and a high capacity can be provided even when the magnetic disk drive is of small dimensions.

As stated above, according to the present invention, the following effects can be provided.

(a) A magnetic disk drive can be provided wherein the rolling angle is lowered in a range not predictable from the ratio of dimension between the invented magnetic head and the conventional magnetic head, the spacing loss is reduced, and the flying posture is stabilized, and which is suitable for the high recording density.

(b) Since the selection of the configuration of the slider is performed as a means of reducing the rolling angle, a magnetic disk drive can be provided wherein the flying height can be lowered without causing the problems of the deviation of mass with respect to the center of motion of the slider, and the nonuniformity of the moment of momentum, while stabilizing the flying posture and securing the reliability.

(c) Since the constant flying height can be maintained without being substantially influenced by the size of the skew angle, the zone bit recording system can be adopted and a magnetic disk drive having a small size, the high density recording and the high capacity can be provided.

(d) Since the flying quantity can be maintained without being substantially influenced by the size of the skew angle, the skew angle can be set at a large value and a downsized magnetic disk drive can be provided.

(e) Since the width of the slider in a direction orthogonal to the air discharge direction, is 2.5 mm or less, or preferably 0.5 to 2.5 mm, compared with the slider of the conventional magnetic head, the landing area viewed in the direction of track arrangement can considerably be reduced when the magnetic head is stationary on the magnetic disk. Accordingly, the number of tracks on the magnetic disk can be increased, which contributes to the increase of the recording density and the recording capacity. In the magnetic head having thin film reading/writing elements of general dimensions, compared with the conventional one, the recording area can be increased by about 80 tracks.

(f) Since the thickness d of the slider is 0.65 mm or less, the magnetic disk drive can be thinned to about 70% or less of the conventional one. By this thinning, the number of magnetic disks which can be accommodated in the downsized and limited space of the magnetic disk, is increased thereby achieving a further higher capacity.

(g) Since the slider is provided with dimensions wherein the thickness thereof from the flying plane to the opposite surface on the reversed side is 0.65 mm or less, the length in the air discharge direction, 3 mm or less, or preferably 0.5 to 3 mm and the width in a direction orthogonal to the air discharge direction, 2.5 mm or less, or preferably 0.5 to 2.5 mm, a magnetic disk drive having the high flying stability of the magnetic head, can be provided.

(h) By the downsizing of a total configuration of the slider, the dynamic lift is lowered and accordingly, the spring pressure can be lowered. Therefore, the loading force exerted from the flying plane to the magnetic disk in the contact time, is lowered and the friction and wear thereof are reduced thereby promoting the durability.

(i) Since the static friction in the CSS starting is reduced, the driving torque of the disk driving motor is decreased, and the power consumption is reduced. Accordingly, a downsized magnetic disk drive capable of driving by a cell can be provided.

## Claims

1. A method of maintaining a constant flying height of a magnetic head: adapted to maintain a flying height of a magnetic head on a magnetic disk substantially constant irrespective of a change of a skew angle, utilizing a device comprising a magnetic disk (M), a positioning device (4), a head supporting device (3) and a magnetic head (34); said positioning device (4) supporting one end of said head supporting device (3) and rotating the head supporting device (3) above said magnetic disk within a predetermined skew angle range; the head supporting device (3) supporting said magnetic head (34) at the other end thereof; the magnetic head (34) being attached with reading/writing elements (2) at an air discharge end of a slider having flying planes (103, 104) on a side opposing the magnetic disk; a thickness of said slider from each of the flying planes to an opposite surface (105) on the reverse side thereof being 0.65 mm or less; a length in a first direction of air discharge thereof being 0.5 mm to 3 mm, and a width in a second direction orthogonal to the first direction of air discharge thereof being 0.5 mm to 2.5 mm; wherein a change of the flying height of the magnetic head on the magnetic disk is 0.2 μm or less and the flying height is substantially constant, when the skew angle is changed in a range of -20 to 20 degree, by the balance between an air flow caused by a rotation of the magnetic disk and the dimensions of the slider.

2. A magnetic disk drive comprising:

a magnetic disk (M); a positioning device (4); a head supporting device (3); and a magnetic head (34);
said positioning device (4) supporting one end of said head supporting device (3) and rotating the head supporting device within a predetermined angle range;

the head supporting device (3) supporting said magnetic head at the other end thereof;

the magnetic head being attached with reading/ writing elements (2) at an air discharge end of a slider having flying planes (103, 104) on a side opposing the magnetic disk;

a thickness of said slider from each of the floating planes (103, 104) to an opposite surface (105) on the reverse side thereof being 0.65 mm or less;

a length in a first direction of air discharge thereof being 0.5 mm to 3 mm; and

a width in a second direction orthogonal to the first direction of air discharge being 0.5 mm to 2.5 mm such that a flying height of the magnetic head on the magnetic disk is 0.2 µm or less, and can be maintained to be substantially constant when the skew angle is changed in a range of -20 to 20 degrees, by the balance between an air flow caused by a rotation of the magnetic disk and the dimensions of the slider.

3. The magnetic disk drive according to Claim 2, wherein the reading/writing elements (2) each is a thin film element.

4. The magnetic disk drive according to Claim 2 or 3, wherein each of the flying planes (103, 104) is a plane having no tapered portion at an air inflow end thereof.

**Patentansprüche**

1. Verfahren zum Beibehalten einer konstanten Flughöhe eines Magnetkopfes, das dazu geeignet ist, eine Flughöhe eines Magnetkopfes auf einer Magnetplatte unabhängig von einer Veränderung eines Auslenkwinkels unter Verwendung einer Einrichtung mit einer Magnetplatte (M), einer Positioniervorrichtung (4), einer Kopftragvorrichtung (3) und einem Magnetkopf (34) konstant zu halten; wobei die Positioniervorrichtung (4) ein Ende der Kopftragvorrichtung (3) unterstützt und die Kopftragvorrichtung (3) über der Magnetplatte innerhalb eines vorgegebenen Auslenkwinkelbereiches dreht; die Kopftragvorrichtung (3) den Magnetkopf (34) an ihrem anderen Ende trägt; der Magnetkopf (34) mit Lese/Schreib-Elementen (2) verbunden ist, die bei einem Luftabgabeende einer Gleitvorrichtung, die Flugebenen (103, 104) hat, auf einer der Magnetplatte gegenüberliegenden Seite liegen; und wobei eine Dicke der Gleitvorrichtung von jeder der Flugebenen bis zu einer gegenüberliegenden Oberfläche (105) auf ihrer Rückseite 0,65 mm oder weniger beträgt, eine Länge in einer ersten Richtung der Luftabgabe der Gleitvorrichtung 0,5 mm bis 3 mm beträgt und eine Breite in einer zweiten zur ersten Richtung orthogonalen Richtung 0,5 mm bis 2,5 mm beträgt; bei dem durch das Gleichgewicht zwischen einer durch die Drehung der Magnetplatte bewirkten Luftströmung und den Dimensionen der Gleitvorrichtung eine Veränderung der Flughöhe des Magnetkopfes auf der Magnetplatte 0,2 µm oder weniger beträgt und die Flughöhe im wesentlichen konstant ist, wenn sich der Auslenkwinkel in einem Bereich von -20 bis +20 Grad verändert.

2. Magnetplattenlaufwerk mit

einer Magnetplatte (M), einer Positioniervorrichtung (4), einer Kopftragvorrichtung (3) und einem Magnetkopf (34);

wobei die Positioniervorrichtung (4) ein Ende der Kopftragvorrichtung (3) unterstützt und die Kopftragvorrichtung innerhalb eines vorgegebenen Winkelbereiches dreht;

die Kopftragvorrichtung (3) den Magnetkopf an ihrem anderen Ende trägt;

der Magnetkopf mit Lese/Schreib-Elementen (2) bei einem Luftabgabeende einer Gleitvorrichtung verbunden ist, die Flugebenen (103, 104) auf einer der Magnetplatte gegenüberliegenden Seite aufweist;

eine Dicke der Gleitvorrichtung von jeder der Flugebenen (103, 104) bis zu einer gegenüberliegenden Oberfläche (105) auf ihrer Rückseite 0,65 mm oder weniger beträgt; eine Länge in einer ersten Richtung der Luftabgabe 0,5 mm bis 3 mm beträgt; und

eine Breite in einer zweiten Richtung, die zur ersten Richtung der Luftabgabe orthogonal ist, 0,5 mm bis 2,5 mm beträgt,

so daß eine Flughöhe des Magnetkopfes auf der Magnetplatte 0,2 µm oder weniger ist und durch das

Gleichgewicht zwischen einer durch die Drehung der Magnetplatte verursachten Luftströmung und die Dimensionen der Gleitvorrichtung im wesentlichen konstant gehalten werden kann, wenn sich der Auslenkwinkel in einem Bereich von -20 bis +20 Grad verändert.

3. Magnetplattenlaufwerk nach Anspruch 2, bei dem die Lese/Schreib-Elemente (2) jeweils ein Dünnfilmelement sind.

4. Magnetplattenantrieb nach Anspruch 2 oder 3, bei dem jede der Flugebenen (103, 104) eine Ebene ohne abgeschrägte Abschnitte bei einem Lufteinströmende der Ebenen ist.

**Revendications**

1. Procédé pour maintenir une hauteur de vol constante d'une tête magnétique, adapté pour maintenir une tête magnétique à une hauteur de vol sensiblement constante au-dessus d'un disque magnétique indépendamment d'une modification d'un angle d'obliquité, utilisant un dispositif comprenant un disque magnétique (M), un dispositif de positionnement (4), un dispositif (3) de support de la tête et une tête magnétique (34) ; ledit dispositif de positionnement (4) supportant une extrémité dudit dispositif (3) de support de la tête et faisant tourner le dispositif (3) de support de la tête au-dessus dudit disque magnétique dans une gamme prédéterminée d'angles d'obliquité ; le dispositif (3) de support de la tête supportant ladite tête magnétique (34) à son autre extrémité ; la tête magnétique (34) étant fixée à des éléments de lecture/d'écriture (2) au niveau d'une extrémité de décharge d'air d'un patin possédant des plans flottants (103, 104) sur un côté en vis-à-vis du disque magnétique ; une épaisseur dudit patin entre chacun des plans flottants et une surface opposée (105) sur le côté inverse du patin étant égale à 0,65 mm ou moins ; et une longueur dans une première direction d'évacuation de l'air du patin étant comprise entre 0,5 mm et 3 mm et une largeur dans une seconde direction orthogonale à la première direction de décharge dans l'air étant comprise entre 0,5 mm et 2,5 mm ; dans lequel une modification de la hauteur de vol de la tête magnétique au-dessus du disque magnétique est égale à 0,2 μm ou moins et la hauteur de vol est sensiblement constante, lorsque l'angle d'obliquité est modifié dans une gamme de -20 à 20 degrés, sous l'effet de l'équilibre entre un courant d'air provoqué par une rotation du disque magnétique et les dimensions du patin.

2. Unité de disques magnétiques comprenant :

   un disque magnétique (M) ; un dispositif de positionnement (4) ; un dispositif (3) de support de la tête ; et une tête magnétique (34) ;
   ledit dispositif de positionnement (4) supportant une extrémité dudit dispositif (3) de support de la tête et faisant tourner le dispositif (3) de support de la tête dans une plage angulaire prédéterminée d'obliquité ;
   le dispositif (3) de support de la tête supportant ladite tête magnétique (34) à son autre extrémité ;
   la tête magnétique (34) étant fixée à des éléments de lecture/d'écriture (2) au niveau d'une extrémité d'évacuation de l'air d'un patin possédant des plans flottants (103, 104) sur un côté en vis-à-vis du disque magnétique ;
   une épaisseur dudit patin entre chacun des plans flottants et une surface opposée (105) sur le côté inverse du patin étant égale à 0,65 mm ou moins ;
   une longueur dans une première direction de décharge d'air du patin étant comprise entre 0,5 mm et 3 mm ; et
   une largeur dans une seconde direction orthogonale à la première direction de décharge dans l'air étant comprise entre 0,5 mm et 2,5 mm de telle sorte qu'une hauteur de vol de la tête magnétique au-dessus du disque magnétique est égale à 0,2 μm ou moins et peut être maintenue sensiblement constante, lorsque l'angle d'obliquité est modifié dans une gamme de -20 à 20 degrés, sous l'effet de l'équilibre entre un courant d'air provoqué par une rotation du disque magnétique et les dimensions du patin.

3. Unité de disques magnétiques selon la revendication 2, dans lequel les éléments de lecture/d'écriture (2) sont constitués chacun par un élément formé d'une couche mince.

4. Unité de disques magnétiques selon la revendication 2 ou 3, dans lequel chacun des plans flottants (103, 104) est un plan ne comportant aucune partie de forme rétrécie au niveau de son extrémité d'entrée de l'air.

EP 0 592 697 B1

# FIGURE    I

13

# FIGURE 2

# FIGURE 3

## FIGURE 4

## FIGURE 5 A

## FIGURE 5 B

# FIGURE 6

# FIGURE 7

# FIGURE 8

# FIGURE 9

(mV)

TIME ⟶     X=1msec/dV

# FIGURE 10

EP 0 592 697 B1

FIGURE 11

□ : 2.8 x 2.3 x 0.65 (mm)
+ : 2 x 1.6 x 0.45 (mm)
△ : 4 x 3.2 x 0.85 (mm)

FIGURE 12

19

## FIGURE 13

## FIGURE 14

FIGURE 15

EP 0 592 697 B1

# FIGURE 15 A

# FIGURE 16

$\Theta_1$ : Positive skew angle (+)

$\Theta_2$ : Negative skew angle (-)

$a$ ; Disk rotation direction

# FIGURE 17

## FIGURE 18

## FIGURE 19

FIGURE 20

FIGURE 21

FIGURE 22